# EUROPEAN PATENT SPECIFICATION

(11) **EP 3 793 864 B1**
(45) Date of publication and mention of the grant of the patent: **29.04.2026**
(21) Application number: 19722114.6
(22) Date of filing: 06.05.2019
(51) Int. Cl.: B60R 5/02, B60R 13/01

(54) **ACOUSTIC FRONT STORAGE COMPARTMENT FOR A VEHICLE**
AKUSTISCHES VORDERES STAUFACH FÜR EIN FAHRZEUG
COMPARTIMENT AVANT DE STOCKAGE ACOUSTIQUE POUR UN VÉHICULE

(30) Priority: 18.05.2018 EP 18173214
(43) Date of publication of application: 24.03.2021
(73) Proprietor: Autoneum Management AG, 8406 Winterthur (CH)
(72) Inventor: MAZZARELLA, Luca, 8400 Winterthur (CH)
(86) International application number: PCT/EP2019/061511
(87) International publication number: WO 2019/219426

(56) References cited:
- WO-A1-2011/045364
- DE-A1- 102004 022 464
- GB-A- 2 552 234
- US-A1- 2009 263 620
- US-B1- 6 569 509

## Description

### Technical Field

The invention is directed to a moulded front storage compartment for a vehicle, in particular a car, such as an electric battery vehicle.

### Background Art

The main storage space in a car, also referred to as the trunk, boot or luggage or goods compartment, is often located at the rear of the car and is traditionally formed by the structural metal body floor and walls of the car, lined with protective cover materials.

The cover material is supported over its surface by the structural metal body floor and walls of the car and since the load from the luggage or goods is mainly carried by the car body's floor, the cover material does not have to be very stiff.

Many electric cars have a storage space located at the front of the vehicle, since the power train takes less space and or the electric motor is not located at the front of the car.

Unlike at the rear of the car, the front structural body does not have a floor that can be used to form a storage space where a lining can be supported, but has only main structural beams. The trim parts located in this area of the car may be subjected to dirt, hot, cold and/or wet weather conditions.

The front storage compartment, also referred to as frunk or luggage or goods compartment, is therefore formed by a solid plastic structural material shaped into a three-dimensional storage cavity, simply supported around the upper rim of the storage compartment and possibly at single points under the storage compartment at the vehicles main structural beams. Such a storage compartment may need to carry up to 80 kg and must therefore be rigid and have sufficient high stiffness since the support from the body of the car may be less than in the case of the traditional rear luggage or goods compartment. The solid plastic materials used for such a luggage or goods compartment are heavy and since not porous also not providing any noise absorption. It is therefore the object of the current invention to provide an alternative material suitable for forming the front storage compartment overcoming the problems of the current solution in particular to reduce noise and enhance acoustic performance.

GB 2 552 234 A discloses a moulded storage compartment for a vehicle.

### Summary of invention

The object of the invention is achieved by a front storage compartment according to claim 1.

The moulded front storage compartment for a vehicle according to the invention comprises a structural layer wherein the structural layer is shaped as a three-dimensional storage cavity for holding luggage or goods wherein the structural layer consists of one porous fibrous layer and wherein the porous fibrous layer is consisting essentially of thermoplastic core-sheath bicomponent endless filaments wherein the core consists of a first polymer and the sheath consists of a second polymer.

The term "consisting essentially of" should be understood as the porous fibrous layer consisting of thermoplastic core-sheath bicomponent endless filaments, but minor amounts of impurities may be present.

Surprisingly a porous fibrous layer consisting essentially of thermoplastic core-sheath bicomponent endless filaments can be formed in a strong three dimensional shape and wherein the porous fibrous layer has sufficient strength and stiffness. Since the porous fibrous layer has enough strength and stiffness no other structural layers are needed and the storage compartment may consist of only the porous fibrous layer according to the invention possibly with additional scrim or film layers and or decorative layers not substantially contributing to the overall stiffness of the moulded front storage compartment.

Surprisingly the porous fibrous layer according to the invention is structural in the sense of being able to mostly keep its shape, but also being stiff enough to substantially maintain its shape when loaded with luggage or goods.

The porous fibrous layer is also structural in the sense of keeping its form and elasticity also under load and or after long periods of exposure to higher temperatures as well as after aging.

Endless filaments, also known as continuous filaments, are continuous fibres with indefinite length, not cut to a specific length. In particular cut melt-spun filaments forming staple fibres are not endless filaments.

Hereinafter the terms filaments or bicomponent filaments are referring to thermoplastic core-sheath bicomponent endless filaments.

Core-sheath bicomponent endless filaments may be formed by two polymers combined to form endless filaments having a core of one polymer and a surrounding sheath of the other polymer and the production of such filaments is known in the art. It is however not required that the sheath polymer totally surrounds the core polymer.

The second polymer has a melting point lower than the melting point of the first polymer so that upon heating the bicomponent filaments, the first and second polymers react differently. For example, when the bicomponent filaments, during production of the porous fibrous layer, are heated to a temperature that is above the softening or melting point of the second polymer (the sheath polymer) and below the melting point of the first polymer (the core polymer), the second polymer will soften or melt while the first polymer doesn't. This softening of the second polymer will cause the second polymer to become sticky and bond to filaments that may be in close proximity. Preferably the second polymer is melting and forming droplets binding adjacent filament at their crossing points. While the core polymer stays intact and forms a network of filaments in the final product.

Surprisingly the required strength and stiffness of the porous fibrous layer can be achieved, and increased compared to fibrous layers made of high and low melt fibers, by using thermoplastic endless filaments.

The endless filaments are spanning over complete areas being bent when the storage compartment is being loaded and therefore the filaments are heavily contributing to the strength and stiffness of the storage compartment. Since the filaments are spanning over a longer distance compared to cut fibers they give a higher strength compared to the relatively short fibers.

Furthermore the advantages of using bicomponent filaments are that the binder polymer, being the sheath polymer, is well distributed over the fibrous layer and that the sheath of all filaments is contributing to bonding the filaments together which means that each and every connection point contributes to the binding the filaments, which is increasing the strength, and improving the adhesion between the core of the filaments, creating a stronger layer.

Preferably the porous fibrous layer is a melt spun nonwoven made of polyester bicomponent filaments compressed during thermal moulding to form a consolidated compact porous layer.

Preferably the porous fibrous layer has a flexural modulus of at least 70 Mpa, preferably between 70 and 1300 MPa, preferably between 100 and 950 MPa, preferably between 150 and 900 MPa, measured according to the current ISO 178, in order to be able to hold luggage or goods without deforming too much. The measurements have been performed at, according to the ISO 178 specified, 23 degree Celsius and 50% relative humidity.

Surprisingly already a very thin compressed porous fibrous layer according to the invention achieves enough strength and stiffness. Preferably the porous fibrous layer has a thickness between 0.5 and 7 mm, preferably between 1 and 5 mm, preferably between 1 and 3 mm.

Preferably the bicomponent filaments used are 100% polyester based.

A porous fibrous layer made of 100% polyester allows easier recycling of either cut-offs and or the product as a whole at the end of the product lifecycle. Reused material can be processed to PET pellets again and can be reused in the product or in other PET containing products. In particular, the PET used to produce the core can partly comprise recycled PET.

Preferably the first polymer is polyester, preferably polyethylene-terephthalate (PET), or polybutylene terephthalate (PBT).

Preferably the second polymer is a copolymer of polyester, preferably a copolymer of polyethylene-terephthalate (coPET), or a copolymer of polybutylene terephthalate (coPBT), or polypropylene.

Specific polymer combinations for the bicomponent filaments are for example, polyethylene terephthalate/co-polyethylene terethpthalate (PET/coPET), and / polybutylene terephthalate/co-polybutylene terephthalate (PBT/coPBT) or other combinations of above mentioned polymers. The second named polymer is the sheath, the first named the core polymer.

The amount of the second polymer, in weight percentage of the porous fibrous layer, is preferably between 10 and 50%, preferably between 20 and 40% in order to improve the bond between the core filaments and providing an air permeable porous fibrous layer.

Preferably the diameter of the filaments is between 14 to 37 microns, preferably between 20 to 25 microns, in order to achieve required strength.

Preferably the porous fibrous layer has an area weight between 500 and 2500 g/m², preferably between 700 and 2000 g/m², preferably between 1000 and 1600 g/m².

The porous fibrous layer is preferably air permeable in order to be noise absorbent and has preferably an air flow resistance (AFR) between 100 to 8000 Ns/m³, preferably between 300 to 5000 Ns/m³, preferably between 1000 to 3000 Ns/m³, measured according to current ISO 9053, using the direct airflow method, method A.

The front storage compartment according to the invention may further comprise a rim for mounting the front storage compartment in the vehicle, wherein the rim comprises a porous textile material which is preferably made of the same material as the porous fibrous layer and where, in order to further enhance the noise absorption, the rim preferably covers an area up to the complete area covered by the vehicles front hood.

By increasing the surface area of the rim comprising the porous fibrous material, the overall absorption and noise reduction in the front of the vehicle may be improved.

The rim may be made as a separate part mounted to the front storage compartment and to the vehicle and may comprise the same material as the porous fibrous layer and or may be made of another fibrous material.

For embodiments where the rim comprises the same material as the porous fibrous layer, the rim may be made monolithic with the porous fibrous layer forming the three-dimensional storage cavity.

The front storage compartment according to the invention preferably further comprises means for mounting the front storage compartment to the vehicle. Preferably the front storage compartment is mounted at least at the rim, for example by punch or screw clips or screws in combination with a nut or a clip; however other more elaborate solutions are possible as well.

In order to further enhance the stiffness of the front storage compartment the porous fibrous layer according to the invention may comprise stiffening corrugations and or ribs. Such corrugations and or ribs may be created during layer moulding of the porous fibrous layer.

The moulded front storage compartment according to the invention may comprise further layers situated on the inner or outer side of the cavity forming the storage compartment, such as a film or foil. The film or foil is preferably at least partly perforated to maintain or enhance the acoustic performance of the porous fibrous layer.

Preferably the film or foil is made of thermoplastic polymer such as, thermoplastic olefin, Low-density polyethylene, thermoplastic polyurethane, polyester, copolyester, polyamide, polyethylene or similar and the film or foil may be impervious or perforated. The foil or film is preferably laminated to the fibrous layer during moulding of the storage compartment.

Alternative a breathable foamed layer may be used containing pin holes to enable vapour transmission between the cavity space and the area surrounding the cavity.

These additional layers may just have a decorative function and or protective functions such as being water repellent.

The moulded front storage compartment according to the invention may further comprise a decorative layer on at least a part of the inside of the storage compartment, such as a carpet e.g. a tufted or needle punch carpet, non-woven layer, textile knit layer, rubber layer or flocked layer. This decorative layer may also have the function to provide a soft surface in order to protect the porous fibrous layer.

Alternatively also a carpet mat or rubber mat might be used to cover at least partly the inner side of the cavity. Preferably the mat is laminated or glued to the inner surface or alternatively attached with clips. Preferably it is used in conjunction to the decorative layer.

In order to further enhance the absorption, the moulded front storage compartment according to the invention may further comprise at least one additional absorbing layer situated on the outside of moulded front storage compartment.

This at least one additional layer may for example be a felt or foam layer, preferably open cell foam, or a combination of felt and foam layers. The layer or layers may also be covered or wrapped in a foil in order to protect the layer from for example moist and dirt.

The moulded front storage compartment according to the invention comprises a structural layer consisting of the porous fibrous layer.

The moulded front storage compartment according to the invention may further comprise an air ventilation hole and or drain hole.

The front storage compartment according to the invention may further comprise at least one partition plate preferably positioned in essential horizontal and or vertical position, dividing the storage cavity into at least two sub cavities. In the case of horizontal positioned partition plate, the plate is preferably stiff enough to carry luggage or goods put inside the storage cavity. Preferably such a substantially horizontal plate may be carried by a recess in the porous fibrous layer of the storage cavity.

The at least one partition plate may comprise the same material as the porous fibrous layer or be made of a sandwich construction where a polyester foam is situated in-between two layers of the porous fibrous layer. Furthermore the partition plate may be made of know constructions such as reinforced glass fiber or honeycomb construction.

The front storage compartment according to the invention may further comprise an insert for holding tools, preferably situated at the bottom of the storage cavity. Preferable the insert comprises polypropylene foam (EPP foam).

The front storage compartment according to the invention may comprise a lid closing the storage space, wherein the lid may comprise the same material as the porous fibrous layer and or other materials known in the art.

Preferably the porous fibrous layer is made of a web of random laid melt spun polyester bicomponent endless filaments, wherein the filaments are cross-lapped and needled to form a nonwoven mat.

In this embodiment the porous fibrous layer is produced by a web of random laid melt spun bicomponent filaments that is cross-lapped and needled to form a nonwoven mat with an area weight of around 500-2500 g/m². After moulding the porous fibrous layer to the final three-dimensional shape defining the storage cavity, the layer has preferably a thickness of 0.5-7 mm, more preferably a thickness of between 1-3 mm.

By needling the cross lapped layers of the filament web, the nonwoven mat obtained can be handled, for instance for transfer to the moulding tool. Surprisingly the needling of the filament web enhances the mechanical properties of the final product significantly. By entangling the filaments, they form a stronger network leading to an increase in shear force inside the porous fibrous layer, enhancing the strength and stiffness of the layer. In addition by heavily needling the layer, the needles leave holes in the material, which are large enough to stay during the moulding step, reducing the AFR of the layer and therefore enhancing the acoustic absorption of the overall product.

The moulded front storage compartment can be produced according to the standard production methods known in the art with at least a moulding step. The fibrous layer and optionally layers may be heated in advance to the moulding or in the same step as the moulding to obtain the consolidation of the porous fibrous layer and lamination of possible optional layers to the fibrous layer. The heating is preferably made by hot steam. During the moulding step the porous fibrous layer is compressed and consolidated to form the three-dimensional shape of the front storage compartment.

### Brief description of drawings

Figure 1 is a schematic cross-sectional view of a car with a moulded front storage compartment according to the invention.
Figure 2 is a schematic picture of the front of a car with a moulded front storage compartment according to the invention.
Figure 3 is a schematic picture of the front of a car with a moulded front storage compartment according to the invention, with extended rim.

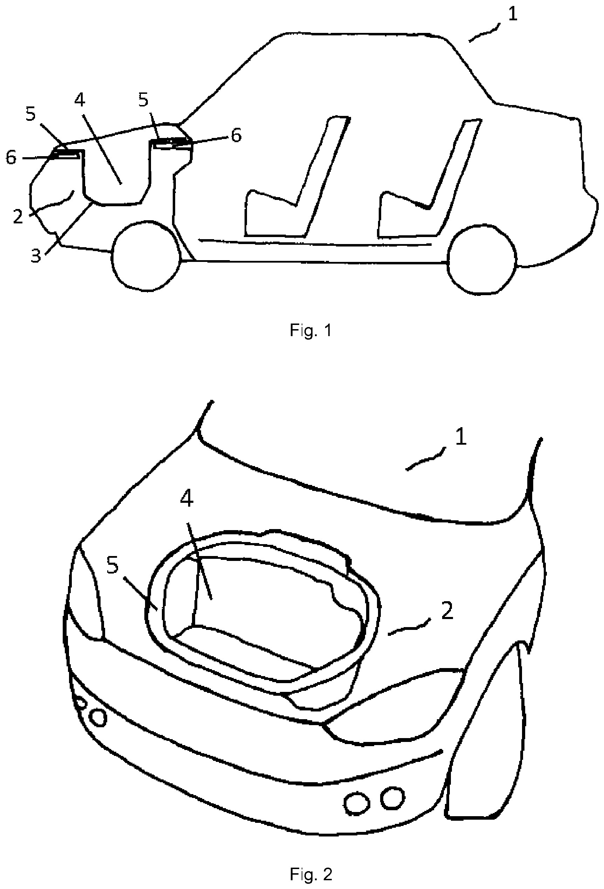

Figure 1 shows a schematic cross-sectional view of a car (1) with a moulded front storage compartment (2) according to the invention, with the structural porous fibrous layer (3) shaped as a three-dimensional storage cavity (4). The moulded front storage compartment (2) is located in the front of the vehicle and the rim (5) of the storage compartment (2) is resting on structural beams (6) of the car body where the storage compartment is also attached to the body by for example clips. The rim is made of the porous fibrous layer.

Figure 2 shows a schematic picture of the front of a car (1) with a moulded front storage compartment (2) according to the invention, with the structural fibrous layer shaped as a three-dimensional storage cavity (4). The rim (5) of the moulded front storage compartment (2) rests on the car body where the storage compartment is also attached to the body by, for example, clips (not shown in the figure).

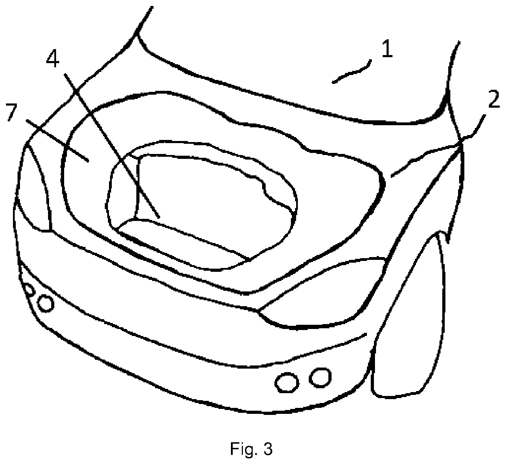

Figure 3 shows a schematic picture of the front of a car (1) with a moulded front storage compartment (2) according to the invention, with the structural fibrous layer shaped as a three-dimensional storage cavity (4). The rim (7) of the moulded front storage compartment (2) extends in essentially horizontal direction covering an area up to the complete area covered by the hood (the hood is not shown in the figure). In this way the font area under the hood is not only better protected but also due to the increased area of the porous fibrous layer also the absorption is increased.

The rim (5, 7) in figure 2 and 3 is preferably made of the same material as the porous fibrous layer.

## Claims

1. A moulded front storage compartment (2) for a vehicle, comprising a structural layer wherein the structural layer is shaped as a three-dimensional storage cavity (4) for holding luggage or goods **characterised in that** the structural layer consists of one porous fibrous layer (3) and wherein the porous fibrous layer is consisting essentially of thermoplastic core-sheath bicomponent endless filaments wherein the core consists of a first polymer and the sheath consists of a second polymer.

2. A moulded front storage compartment according to claim 1 wherein the porous fibrous layer has a flexural modulus of at least 70 Mpa, preferably between 70 and 1300 MPa, preferably between 100 and 950 MPa, preferably between 150 and 900 MPa, measured according to ISO 178.

3. A moulded front storage compartment according to any of the preceding claims wherein the porous fibrous layer has a thickness between 0.5 and 7 mm, preferably between 1 and 5 mm, preferably between 1 and 3 mm.

4. A moulded front storage compartment according to any of the preceding claims wherein the first polymer is polyester, preferably polyethylene-terephthalate (PET), or polybutylene terephthalate (PBT).

5. A moulded front storage compartment according to any of the preceding claims wherein the second polymer is a copolymer of polyester, preferably a copolymer of polyethylene-terephthalate (coPET), or a copolymer of polybutylene terephthalate (coPBT), or polypropylene.

6. A moulded front storage compartment according to any of the preceding claims, wherein the amount of the second polymer, in weight percentage of the porous fibrous layer is between 10 and 50%, preferably between 20 and 40%.

7. A moulded front storage compartment according to any of the preceding claims wherein the porous fibrous layer has an area weight between 500 and 2500 g/m², preferably between 700 and 2000 g/m², preferably between 1000 and 1600 g/m².

8. A moulded front storage compartment according to any of the preceding claims wherein the porous fibrous layer has an air flow resistance between 100 to 8000 Ns/m³, preferably between 300 to 5000 Ns/m³, preferably between 1000 to 3000 Ns/m³, measured according to current ISO 9053, using the direct airflow method, method A.

9. A moulded front storage compartment according to any of the preceding claims, further comprising a rim (5, 7) for mounting the front storage compartment in the vehicle, wherein the rim (5, 7) comprises a porous textile material which is preferably made of the same material as the porous fibrous layer, preferably the rim is covering an area up to the complete area covered by the vehicles front hood.

10. A moulded front storage compartment according to any of the preceding claims wherein the porous fibrous layer comprises stiffening corrugations and/or ribs.

11. A moulded front storage compartment according to any of the preceding claims further comprising a scrim, film or foil, being perforated or not perforated and/or at least one absorbing layer situated on the outer surface of the moulded front storage compartment.

12. A moulded front storage compartment according to any of the preceding claims further comprising a decorative layer on the inside of the storage compartment, such as a carpet, non-woven layer, textile knit layer rubber layer or flocked layer.

13. A moulded front storage compartment according to any of the preceding claims wherein the porous fibrous layer is made of a web of random laid melt spun polyester bicomponent endless filaments, wherein the filaments are cross-lapped and needled to form a nonwoven mat.

## Patentansprüche

1. Geformtes vorderes Staufach (2) für ein Fahrzeug, umfassend eine Strukturschicht, wobei die Strukturschicht als dreidimensionaler Stauraum (4) zum Aufnehmen von Gepäck oder Gütern geformt ist, **dadurch gekennzeichnet, dass** die Strukturschicht aus einer porösen Faserschicht (3) besteht, und wobei die poröse Faserschicht im Wesentlichen aus thermoplastischen Kern-Mantel-Bikomponenten-Endlosfasern besteht, wobei der Kern aus einem ersten Polymer und der Mantel aus einem zweiten Polymer besteht.

2. Geformtes vorderes Staufach nach Anspruch 1, wobei die poröse Faserschicht einen Biegemodul von mindestens 70 Mpa, vorzugsweise zwischen 70 und 1300 MPa, vorzugsweise zwischen 100 und 950 MPa, vorzugsweise zwischen 150 und 900 MPa, gemessen gemäß ISO 178, aufweist.

3. Geformtes vorderes Staufach nach einem der vorstehenden Ansprüche, wobei die poröse Faserschicht eine Dicke zwischen 0,5 und 7 mm, vorzugsweise zwischen 1 und 5 mm, vorzugsweise zwischen 1 und 3 mm aufweist.

4. Geformtes vorderes Staufach nach einem der vorstehenden Ansprüche, wobei das erste Polymer Polyester, vorzugsweise Polyethylenterephthalat (PET) oder Polybutylenterephthalat (PBT) ist.

5. Geformtes vorderes Staufach nach einem der vorstehenden Ansprüche, wobei das zweite Polymer ein Copolymer von Polyester, vorzugsweise ein Copolymer von Polyethylenterephthalat (coPET) oder Polybutylenterephthalat (coPBT) oder Polypropylen ist.

6. Geformtes vorderes Staufach nach einem der vorstehenden Ansprüche,
wobei die Menge des zweiten Polymers, ausgedrückt in Gewichtsprozent der porösen Faserschicht, zwischen 10 und 50 %, vorzugsweise zwischen 20 und 40 % beträgt.

7. Geformtes vorderes Staufach nach einem der vorstehenden Ansprüche, wobei die poröse Faserschicht ein Flächengewicht zwischen 500 und 2500 g/m², vorzugsweise zwischen 700 und 2000 g/m², vorzugsweise zwischen 1000 und 1600 g/m² aufweist.

8. Geformtes vorderes Staufach nach einem der vorstehenden Ansprüche, wobei die mindestens eine poröse Faserschicht einen Luftströmungswiderstand zwischen 100 bis 8000 Ns/m³, vorzugsweise zwischen 300 und 5000 Ns/m³, vorzugsweise zwischen 1000 und 3000 Ns/m³, gemessen gemäß der aktuellen ISO 9053 unter Verwendung des Direktluftströmungsverfahrens, Verfahren A, aufweist.

9. Geformtes vorderes Staufach nach einem der vorstehenden Ansprüche, das weiter einen Rand (5, 7) zum Montieren des vorderen Staufachs im Fahrzeug umfasst, wobei der Rand (5, 7) ein poröses Textilmaterial umfasst, das vorzugsweise aus dem gleichen Material wie die poröse Faserschicht hergestellt ist, wobei der Rand vorzugsweise einen Bereich bis hin zur gesamten von der Motorhaube des Fahrzeugs abgedeckten Fläche abdeckt.

10. Geformtes vorderes Staufach nach einem der vorstehenden Ansprüche, wobei die poröse Faserschicht versteifende Wellen und/oder Rippen umfasst.

11. Geformtes vorderes Staufach nach einem der vorstehenden Ansprüche, das weiter einen Gelege, Film oder Folie umfasst, der perforiert oder nicht perforiert ist und/oder mindestens eine absorbierende Schicht, die auf der Außenseite des geformten vorderen Staufachs positioniert ist.

12. Geformtes vorderes Staufach nach einem der vorstehenden Ansprüche, das weiter eine dekorative Schicht auf der Innenseite des Staufachs umfasst, beispielsweise einen Teppich, eine Vliesschicht, eine textile Strickschicht, eine Gummischicht oder eine beflockte Schicht.

13. Geformtes vorderes Staufach nach einem der vorstehenden Ansprüche, wobei die poröse Faserschicht aus einem Gewebe aus zufällig gelegten schmelzgesponnenen Polyester-Bikomponenten-Endlosfasern hergestellt ist, wobei die Endlosfaser in Kreuzlage überlappend und genadelt sind, um eine Vliesmatte zu bilden.

## Revendications

1. Compartiment de rangement avant moulé (2) pour un véhicule, comprenant une couche structurelle, dans lequel la couche structurelle est formée comme une cavité de rangement tridimensionnelle (4) pour contenir des bagages ou des marchandises, **caractérisée en ce que** la couche structurelle est constituée d'une couche fibreuse poreuse (3) et dans lequel la couche fibreuse poreuse est essentiellement constituée de filaments sans fin thermoplastiques du type bicomposant noyau-gaine, dans lequel le noyau est constitué d'un premier polymère et la gaine est constituée d'un second polymère.

2. Compartiment de rangement avant moulé selon la revendication 1, dans lequel la couche fibreuse poreuse présente un module de flexion d'au moins 70 MPa, de préférence compris entre 70 et 1300 MPa, de préférence entre 100 et 950 MPa, de préférence entre 150 et 900 MPa, mesuré selon la norme ISO 178.

3. Compartiment de rangement avant moulé selon l'une quelconque des revendications précédentes, dans lequel la couche fibreuse poreuse présente une épaisseur comprise entre 0,5 et 7 mm, de préférence entre 1 et 5 mm, de préférence entre 1 et 3 mm.

4. Compartiment de rangement avant moulé selon l'une quelconque des revendications précédentes, dans lequel le premier polymère est du polyester, de préférence du polyéthylène téréphtalate (PET) ou du polybutylène téréphtalate (PBT).

5. Compartiment de rangement avant moulé selon l'une quelconque des revendications précédentes, dans lequel le second polymère est un copolymère de polyester, de préférence un copolymère de polyéthylène téréphtalate (coPET), ou un copolymère de polybutylène téréphtalate (coPBT), ou de polypropylène.

6. Compartiment de rangement avant moulé selon l'une quelconque des revendications précédentes,
dans lequel la teneur en second polymère, en pourcentage de poids de la couche fibreuse poreuse, est comprise entre 10 et 50 %, de préférence entre 20 et 40 %.

7. Compartiment de rangement avant moulé selon l'une quelconque des revendications précédentes, dans lequel la couche fibreuse poreuse présente un poids surfacique compris entre 500 et 2500 g/m², de préférence entre 700 et 2000 g/m², de préférence entre 1000 et 1600 g/m².

8. Compartiment de rangement avant moulé selon l'une quelconque des revendications précédentes, dans lequel la couche fibreuse poreuse présente une résistance au flux d'air comprise entre 100 et 8000 Ns/m³, de préférence entre 300 et 5000 Ns/m³, de préférence entre 1000 et 3000 Ns/m³, mesurée selon la norme ISO 9053 en vigueur, à l'aide du procédé à flux d'air direct, procédé A.

9. Compartiment de rangement avant moulé selon l'une quelconque des revendications précédentes, comprenant en outre un rebord (5, 7) pour le montage du compartiment de rangement avant dans le véhicule, dans lequel le rebord (5, 7) comprend un matériau textile poreux qui est de préférence constitué du même matériau que la couche fibreuse poreuse, de préférence le rebord recouvre une zone allant jusqu'à la zone entièrement recouverte par le capot avant du véhicule.

10. Compartiment de rangement avant moulé selon l'une quelconque des revendications précédentes, dans lequel la couche fibreuse poreuse comprend des ondulations et/ou des nervures de renforcement.

11. Compartiment de rangement avant moulé selon l'une quelconque des revendications précédentes, comprenant en outre un textile non tissé, un film ou une feuille, perforé ou non perforé et/ou au moins une couche absorbante située sur la surface extérieure du compartiment de rangement avant moulé.

12. Compartiment de rangement avant moulé selon l'une quelconque des revendications précédentes, comprenant en outre une couche décorative à l'intérieur du compartiment de rangement, telle qu'un tapis, une couche non tissée, une couche de tricot textile, une couche de caoutchouc ou une couche floquée.

13. Compartiment de rangement avant moulé selon l'une quelconque des revendications précédentes, dans lequel la couche fibreuse poreuse est constituée d'une nappe de filaments sans fin bicomposants de polyester filés par fusion disposés de manière aléatoire, dans lequel les filaments sont croisés et aiguilletés pour former un mat non tissé.
